# EUROPÄISCHE PATENTSCHRIFT

(11) **EP 0 359 252 B1**
(45) Veröffentlichungstag und Bekanntmachung des Hinweises auf die Patenterteilung: **18.11.1993**
(21) Anmeldenummer: 89117021.9
(22) Anmeldetag: 14.09.1989
(51) Int. Cl.: C08L 83/07, C08K 13/02, C08K 3/22, C08K 5/54

(54) **Zu schwerbrennbaren und/oder kriechstromfesten sowie lichtbo genbeständigen Organopolysiloxanelastomeren vernetzbare Massen**
Polysiloxane elastomeric curable compositions resistant to fire, track and electrical arcs
Compositions réticulables en élastomères de siloxane résistances aux flammes, aux courants de fuite et aux arcs électriques

(30) Priorität: 16.09.1988 DE 3831478
(43) Veröffentlichungstag der Anmeldung: 21.03.1990
(73) Patentinhaber: WACKER-CHEMIE GMBH, D-81737 München (DE)
(72) Erfinder: Wolfer, Dietrich, Dr.-Dipl.-Chem., A-5110 Oberndorf (AT); Marsch, Wilhelm, D-8261 Haiming (DE)

(56) Entgegenhaltungen:
- EP-A- 0 051 212
- FR-A- 2 355 050
- US-A- 4 025 485
- US-A- 4 070 343
- US-A- 4 485 206

## Beschreibung

Die vorliegende Erfindung betrifft zu Organopolysiloxanelastomeren vernetzende Massen, wobei die Organopolysiloxanelastomere Schwerbrennbarkeit und/oder hohe Kriechstromfestigkeit sowie hohe Lichtbogenbeständigkeit aufweisen. Die vorliegende Erfindung betrifft weiterhin ein Verfahren zur Herstellung solcher Massen.

In US 4 419 474 (ausgegeben 12. Juni 1983, J. Ackermann et al., Bayer AG) sind flammwidrige Polysiloxanformmassen beschrieben, die Diorganopolysiloxan, feinzerteilte Kieselsäure und/oder andere Füllstoffe, feinzerteiltes Titandioxid, Platin, Härtungsmittel sowie ein Guanidin- oder Harnstoffderivat enthalten. Gemäß US 3 965 065 (ausgegeben 22. Juni 1976, E.C. Elliott, Dow Corning Corporation) und US 4 399 064 (ausgegeben 16. August 1983, R.J. Penneck, Raychem Corporation) werden kriechstromfeste bzw. lichtbogenbeständige Organopolysiloxanelastomere erhalten, durch Zugabe sehr großer Mengen an Aluminiumoxihydrat, wobei weitere Metalloxide als synergistische Zusätze zu Aluminiumoxidhydrat dienen können.

Es bestand die Aufgabe, Additive für zu Organopolysiloxanelastomeren vernetzbare Massen zu finden, die zu schwerbrennbaren und/oder kriechstromfesten sowie lichtbogenbeständigen Elastomeren führen, die in ihrer Wirkung nicht durch Peroxide bei der peroxidischen Vernetzung der Massen beeinflußt werden, die das Einfärben der Massen mit diversen Farbpigmenten nicht verhindern bzw. beeinträchtigen, die die mechanischen Eigenschaften der Organopolysiloxanelastomeren in keiner Weise beeinträchtigen und die die Bereitstellung auch gießbarer Massen und solcher Massen, die zu weichen Organopolysiloxanelastomeren mit Shore-A-Härten unter 50 vernetzen, erlauben. Diese Aufgabe wird durch die Erfindung gelöst.

Gegenstand der Erfindung sind zu schwerbrennbaren und/oder kriechstromfesten sowie lichtbogenbeständigen Organopolysiloxanelastomeren vernetzbare Massen, dadurch gekennzeichnet, daß die Massen zur Erzielung von Schwerbrennbarkeit und/oder hoher Kriechstromfestigkeit sowie hoher Lichtbogenbeständigkeit ein Additiv in Mengen von 1 bis 4 Gew.-%, bezogen auf das Gesamtgewicht der Massen, enthalten, das durch Vermischen von
(A) mindestens 60 Gew.-% Diorganopolysiloxan bestehend aus 75 bis 85 Mol-% Dimethylsiloxaneinheiten, 15 bis 25 Mol-% Vinylmethylsiloxaneinheiten und gegebenfalls weiteren Siloxaneinheiten in einer solchen menge, daß die Summe aus Dimethylsiloxaneinheiten, Vinylmethylsiloxaneinheiten und gegebenenfalls weiteren Siloxaneinheiten 100 Mol % ergibt,
(B) 20 bis 35 Gew.-% eines Metalloxids ausgewählt aus der Gruppe von Titandioxid, Zirkoniumdioxid, Zinkoxid Cer(III)- und Cer(IV)-oxid mit der Maßgabe, daß zur Erzielung von Kriechstromfestigkeit sowie Lichtbogenbeständigkeit nur Titandioxid oder Zirkoniumdioxid eingesetzt wird, während zur Erzielung von Schwerbrennbarkeit jedes der vorstehend genannten Metalloxide einsetzbar ist,
(C) 0,05 bis 0,25 Gew.-% Platin, berechnet als Element, in Form einer Platinverbindung oder eines Platinkomplexes
(D) 1 bis 5 Gew.-% Organosiliciumverbindung mit über Kohlenstoff an Silicium gebundenem basischem Stickstoff
hergestellt wurde, wobei die Summe der jeweils innerhalb der oben unter (A) bis (D) angegebenen Bereiche gewählten Prozentsätze 100 Gew.-% beträgt und sich die jeweiligen Gew.-% auf das Gesamtgewicht des Additivs beziehen.

Der Bestandteil (A) des erfindungsgemäßen Additivs, das vinylreiche Diorganopolysiloxan, enthält gegebenenfalls neben Dimethylsiloxaneinheiten und Vinylmethylsiloxaneinheiten weitere Siloxaneinheiten wie Phenylmethylsiloxaneinheiten in Mengen von höchstens 18 Mol-%.

Als Bestandteil (B) des erfindungsgemäßen Additivs wird bevorzugt Titandioxid und Zirkoniumdioxid eingesetzt, sodaß bevorzugt Organopolysiloxanelastomere erhalten werden, die sowohl schwerbrennbar sind als auch hohe Kriechstromfestigkeit und Lichtbogenbeständigkeit ausweisen. Als Titandioxid wird dabei insbesondere feinteiliges, pyrogen in der Gasphase hergestelltes Titandioxid eingesetzt.

Beispiele für die als Bestandteil (C) des erfindungsgemäßen Additivs eingesetzten Verbindungen oder Komplexe von Platin sind H₂[PtCl₆]·6H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H₂[PtCl₆]·6H₂O und Cyclohexanon, Platin-Vinylsiloxan-Komplexe, insbesondere Platin-1,3-Divinyl-1,1,3,3-tetramethyldisiloxankomplexe mit oder ohne Gehalt an nachweisbarem organischem Halogen, Platin-Norbornadien-methylacetonatkomplexe, Bis-(gamma-picolin)-platindichlorid, Trimethylendipyridinplatindichlorid, Dicyclopentadienplatindichlorid, Dimethylsulfoxydethylenplatin-(II)-dichlorid sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin, oder Ammonium-Platinkomplexe gemäß EP-B 110 370.

Vorzugsweise sind die Organosiliciumverbindungen mit über Kohlenstoff an Silicium gebundenem, basischem Stickstoff, die den Bestandteil (D) des erfindungsgemäßen Additivs ausmachen, solche ausgewählt aus der Gruppe der Silane der Formel

YₐR_{b}Si(OR¹)_{4-a-b} ,

worin R gleiche oder verschiedene einwertige Kohlenwasserstoffreste mit 1 bis 8 Kohlenstoffatom(en) je Rest, R¹ gleiche oder verschiedene Alkylgruppen mit 1 bis 4 Kohlenstoffatom(en) je Rest oder ein Rest der Formel -SiR₃, wobei R die oben dafür angegebene Bedeutung hat, Y gleiche oder verschiedene, einwertige SiC-gebundene organische Reste mit basischem Stickstoff bedeuten, a 1 oder 2 und b 0, 1 oder 2 ist,
und Disiloxane der Formel

(Y_{c}R_{d}Si)₂O,

worin R und Y die oben dafür angegebene Bedeutung haben, c 0, 1, 2 oder 3, insbesondere 1 ist, mit der Maßgabe, daß die Disiloxane mindestens einen Rest Y aufweisen, und d 0, 1, 2 oder 3, insbesondere 2 ist.

Die Organosiliciumverbindungen mit über Kohlenstoff an Silicium gebundenem, basischem Stickstoff können aber auch Organo(poly)siloxane mit maximal 10 Si-Atomen aus Einheiten der Formel

YₓR_{y}Si(OR¹)_{z}O₂

worin R, R¹ und Y die oben dafür angegebene Bedeutung haben, x 0, 1 oder 2, y 0, 1, 2 oder 3 und z 0, 1 oder 2 ist, mit der Maßgabe, daß je Molekül mindestens ein Rest y enthalten ist, sein.

Beispiele für Kohlenwasserstoffreste R sind der Methyl-, Ethyl-, n-Propyl-, Isopropyl- und 2-Ethylherylrest, sowie Butylreste; aus Kohlenstoff- und Wasserstoffatomen aufgebaute Reste mit aliphatischer Mehrfachbindung, wie der Vinyl- und Allylrest; cycloaliphatische Kohlenwasserstoffreste, wie der Cyclopentylrest und Cyclohexylrest, sowie Methylcyclohexylreste; aromatische Kohlenwasserstoffreste, wie der Phenylrest und Xenylreste; Alkarylreste, wie Tolylreste; und Aralkylreste, wie der Benzylrest. Vorzugsweise sind die Kohlenwasserstoffreste R insbesondere wenn sie an Siliciumatome, an die auch über Kohlenstoff basischer Stickstoff gebunden ist, gebunden sind, jedoch frei von aliphatischen Mehrfachbindungen. Schon wegen der leichteren Zugänglichkeit ist weiterhin bevorzugt, daß mindestens 50 % der Anzahl der Reste R Methylreste sind.

Die oben genannten Beispiele für Alkylreste R mit 1 bis 4 Kohlenstoffatom(en) je Rest gelten im vollen Umfang auch für die Reste R¹.

Vorzugsweise sind die Reste Y solche der Formel

R²NHR³- ,

worin R² Wasserstoff oder gleiche oder verschiedene Alkyl-oder Cycloalkyl- oder Aminoalkylreste mit 1 bis 8 Kohlenstoffatomen je Rest und R³ gleiche oder verschiedene geradkettige oder verzweigte von aliphatischen Mehrfachbindungen freie Kohlenwasserstoffreste mit einem Kohlenstoffatom oder 3 oder 4 Kohlenstoffatomen je Rest, insbesondere den Rest der Formel

-(CH₂)₃-

bedeutet.

Die Beispiele für Alkyl- und Cycloalkylreste R gelten im vollen Umfang auch für Alkyl- bzw. Cycloalkylreste R².

Beispiele für Aminoalkylreste R² sind solche der Formel

H₂N(CH₂)₃-

H₂N(CH₂)₂NH(CH₂)₂-

H₂N(CH₂)₂-

(H₃C)₂NH(CH₂)₂-

H₂N(CH₂)₄-

H(NHCH₂CH₂)₃-

und

C₄H₉NH(CH₂)₂NH(CH₂)₂- .

Bevorzugt werden als (D) Organosiliciumverbindungen mit über Kohlenstoff an Silicium gebundenem basischen Stickstoff
N-(2-Aminoalkyl)-3-aminopropyltrimethoxysilan,
N-(2-Aminoethyl)-3-aminopropyltriethoxysilan,
N-(2-Aminoethyl)-3-aminopropylmethyldimethoxysilan,
3-Aminopropyltriethoxysilan,
N-(Cyclohexyl)-3-aminopropyltrimethoxysilan,
N-(2-Aminoethyl)-3-aminopropyl-tris(trimethylsiloxy)silan und
1,2-Bis[N-(2-aminoethyl)-3-aminopropyl]-1,1,2,2-tetramethyldisiloxan
eingesetzt.
Besonders bevorzugt wird N-(2-Aminoethyl)-3-aminopropyltrimethoxysilan eingesetzt.

Die Bestandteile (A) bis (D) des erfindungsgemäßen Additivs werden in einem Rührer oder Kneter miteinander vermischt. Das Additiv kann dann nach mindestens zwei Stunden langem Rühren bzw. Kneten und anschliessendem Stehenlassen der Mischung bei Raumtemperatur für zwei bis drei Tage verwendet werden. Bevorzugt wird die Mischung anwendungsfertig gemacht, indem sie mindestens 120 Minuten lang bei 80° bis 150°C erhitzt wird.

Die erfindungsgemäßen zu Organopolysiloxanelastomeren vernetzbaren Massen enthalten 1 bis 4 Gew.-% erfindungsgemäß verwendetes Additiv, bezogen auf das Gesamtgewicht der jeweiligen Masse. Dabei ist darauf zu achten, daß das Additiv bei additionsvernetzenden Zweikomponenten-Massen nicht der Komponente zugegeben wird, die Organopolysiloxan mit Si-gebundenem Wasserstoff enthält, um keine vorzeitige Vernetzung der Massen auszulösen.

Das vinylreiche Diorganopolysiloxan (A), die Platinverbindung bzw. der Platinkomplex (C) sowie die Organosiliciumverbindung mit über Kohlenstoff an Silicium gebundenem, basischem Stickstoff (D) werden durch das tagelange Stehenlassen bzw. das Erhitzen miteinander umgesetzt und ergeben zusammen mit den Metalloxiden, die lediglich die Wirkung verstärken, ein Additiv, das, nur in geringeren Mengen den übrigen Bestandteilen der zu Organopolysiloxanelastomeren vernetzbaren Massen zugesetzt werden muß, um schwerbrennbare Organopolysiloxanelastomere bzw. schwerbrennbare Organopolysiloxanelastomere mit hoher Kriechstromfestigkeit und Lichtbogenbeständigkeit zu erhalten.

Durch die geringe Menge an Additiv wird das Einfärben der zu Organopolysiloxanelastomeren vernetzbaren Massen nicht beeinträchtigt. Weiterhin sind dadurch auch gießbare Massen, die zu kriechstromfesten Organopolysiloxanelastomeren vernetzen, und solche Massen die, zu weichen, kriechstromfesten Organopolysiloxanelastomeren mit Shore-A-Härten unter 50 vernetzen, zugänglich. Das erfindungsgemäße Additiv führt außerdem zu schwerbrennbaren Organopolysiloxanelastomeren unabhängig von der Art der Vernetzer. So wird die Wirkung des Additivs nicht durch Peroxide bei der peroxidischen Vernetzung der zu Organopolysiloxanelastomeren vernetzbaren Massen beeinträchtigt.

Abgesehen von dem Gehalt an erfindungsgemäß verwendetem Additiv können die erfindungsgemäßen zu Organopolysiloxanelastomeren vernetzbaren Massen die gleichen Bestandteile enthalten, die auch in zu Organopolysiloxanelastomeren vernetzbaren Massen, die kein erfindungsgemäß verwendetes Additiv enthalten, vorliegen können. Diese Bestandteile und ihre Mengenverhältnisse sind schon so oft in Druckschriften beschrieben worden, daß sie hier nicht mehr beschrieben werden müssen.

Die Vernetzung der erfindungsgemäßen zu Organopolysiloxanelastomeren vernetzbaren Massen kann in beliebiger, vielfach bekannter Weise erfolgen.

Die Vernetzung der erfindungsgemäßen zu Organopolysiloxanelastomeren vernetzbaren Massen kann z.B. durch freie Radikale bildende Mittel in bekannter Weise erfolgen. Beispiele für derartige Mittel sind peroxidische Verbindungen, wie Acylperoxide, z.B. Dibenzoylperoxid, Bis-(4-chlorbenzoyl)-peroxid und Bis-(2,4-dichlorbenzoyl)-peroxid; Alkylperoxide und Arylperoxide, wie Di-tert.-butylperoxid und Dicumylperoxid; Perketale, wie 2,5-Bis-(tert.-butylperoxy)-2,5-dimethylhexan; Perester, wie Diacetylperoxy-dicarbonat, tert.-Butylperbenzoat und tert.-Butylperisononanoat; tert.-Butyl-beta-hydroxyethylperoxid; und als freie Radikale bildende Mittel bekannte Azoverbindungen, wie Azoisobuttersäurenitril.

Ebenso kann die Vernetzung der erfindungsgemäßen zu Organopolysiloxanelastomeren vernetzbaren Massen z.B. durch Hochenergiestrahlen, wie alpha-, beta- oder gamma-Strahlen, in bekannter Weise erfolgen.

Ebenso kann die Vernetzung der erfindungsgemäßen zu Organopolysiloxanelastomeren vernetzbaren Massen z.B. durch Anlagerung von Si-gebundenem Wasserstoff an aliphatische Kohlenstoff-Kohlenstoff-Mehrfachbindungen in bekannter Weise erfolgen, wobei die Massen in sogenannten "Einkomponenten-Systemen" oder sogenannten "Zweikomponenten-Systemen" vorliegen können.

Ebenso kann die Vernetzung der erfindungsgemäßen zu Organopolysiloxanelastomeren vernetzbaren Massen z.B. durch Kondensation in bekannter Weise erfolgen, wobei auch hier die Massen in sogenannten "Einkomponenten-Systemen" oder sogenannten "Zweikomponenten-Systemen" vorliegen können.

Ebenso kann die Vernetzung der erfindungsgemäßen zu Organopolysiloxanelastomeren vernetzbaren Massen bei Raumtemperatur oder bei Temperaturen von 40° bis 200°C, wobei es sich um sogenannte "RTV-Massen" oder um sogenannten "HTV-Massen" handeln kann.

Die erfindungsgemäßen zu schwerbrennbaren und/oder kriechstromfesten sowie lichtbogenbeständigen Organopolysiloxanelastomeren vernetzbaren Massen können für alle Zwecke verwendet werden, für die zu schwerbrennbare und/oder kriechstromfeste sowie lichtbogenbeständigen Organopolysiloxanelastomeren vernetzbare Massen verwendet werden können, beispielsweise zur Herstellung von elektrischen Isolationsmaterialien, Mittel- und Hochspannungsisolatoren, Kabelendverschlüsse, Kabelmuffen, Anodenkappen für Fernsehbildröhren und Preßteilen sowie Extrusionsartikeln für die Luftfahrtindustrie.

In den folgenden Beispielen beziehen sich alle Angaben von Teilen auf das Gewicht.

Die in den folgenden Beispielen verwendete Mischung aus Platin-Vinylsiloxan-Komplex und Verdünnungsmittel wurde hergestellt wie folgt:
Zu einer Mischung aus 10 Teilen H₂PtCl₆.6H₂O, 20 Teilen 1,3-Divinyl-1,1,3,3-tetramethyldisiloxan und 50 Teilen Ethanol wurden 20 Teile Natriumbicarbonat gegeben. Das Gemisch wurde 30 Minuten unter Rühren zum Sieden unter Rückfluß erwärmt, dann 15 Stunden stehen gelassen und danach filtriert. Aus dem Filtrat wurden bei etwa 16 hPa (abs.) die flüchtigen Bestandteile abdestilliert. Als Rückstand wurden 17 Teile einer Flüssigkeit erhalten, die in Benzol gelöst wurde. Die Lösung wurde filtriert und aus dem Filtrat das Benzol abdestilliert. Der Rückstand wurde mit Dimethylvinylsiloxaneinheiten als endständige Einheiten aufweisendem Dimethylpolysiloxan mit einer Viskosität von 1400 mPa.s bei 25°C als Verdünnungsmittel in solcher Menge vermischt, daß die Mischung 1 Gewichts-% Platin, berechnet als Element, enthält.

### Beispiel 1:

a) 100 Teile eines 20 Mol-% Vinylmethylsiloxaneinheiten aufweisenden Dimethylpolysiloxans mit einer Viskosität von 50 000 mPa.s bei 25°C werden in einem Rührwerk mit 50 Teilen pyrogen in der Gasphase erzeugtem Titandioxid homogen vermischt. Dann werden 25 Teile der 1 Gewichts-% Platin, berechnet als Element, enthaltenden Mischung aus Platin-Vinylsiloxan-Komplex und Verdünnungsmittel zugegeben. Nach dem Homogenisieren der Mischung werden der Mischung 4 Teile N-(2-Aminoethyl)-3-aminopropyltrimethoxysilan zugemischt. Die Mischung wird anschließend langsam unter starkem Rühren auf 150°C erhitzt und weitere zwei Stunden bei 150°C gerührt.
b) 100 Teile eines durch Trimethylsiloxygruppen endblokkierten Diorganopolysiloxans aus 99,93 Mol-% Dimethylsiloxaneinheiten und 0,07 Mol-% Vinylmethylsiloxaneinheiten mit einer Viskosität von 8 . 10⁶ mPa.s bei 25°C werden in einem bei 150°C betriebenen Kneter zunächst mit 50 Teilen pyrogen in der Gasphase erzeugten Siliciumdioxid mit einer Oberfläche von 200 m²/g, dann mit 1 Teil durch Trimethylsiloxygruppen endblockiertem Dimethylpolysiloxan mit einer Viskosität von 96 mPa.s bei 25°C, dann mit 7 Teilen eines in den endständigen Einheiten je eine Si-gebundene Hydroxylgruppe aufweisenden Dimethylpolysiloxans mit einer Viskosität von 40 mPa.s bei 25°C, dann erneut mit 1 Teil durch Trimethylsiloxygruppen endblockiertem Dimethylpolysiloxan mit einer Viskosität von 95 mPa.s bei 25°C und schließlich mit 2,8 Teilen einer Paste aus gleichen Teilen Bis(2,4-dichlorobenzoyl)-peroxid und eines durch Trimethylsiloxygruppen endblockierten Dimethylpolysiloxans mit einer Viskosität von 250 mPa.s bei 25°C vermischt.

98 Teile der so erhaltenen Mischung werden mit 2 Teilen des Additivs, dessen Herstellung oben unter a) beschrieben wurde, vermischt. Aus dieser Mischung werden durch Vulkanisation bei 150°C Platten mit einer Stärke von 2 mm hergestellt. An einem Teil der Platten wird die Schwerbrennbarkeit bestimmt, wobei das Ausmaß der Flammabweisung jeweils durch den LOI-(Limited Oxygen Index)-Wert, der gemäß ASTM-D 2863-70 bestimmt wird, wiedergegeben wird. Je höher der LOI-Wert, um so höher ist das Ausmaß der Flammabweisung. Der andere Teil der Platten wird nach der Vulkanisation vier Stunden lang bei 200°C getempert. Dann wird die Lichtbogenbeständigkeit nach DIN 57 441 und die Kriechstromfestigkeit nach DIN 57 303 ermittelt. Der nach der Bestimmung der Kriechstromfestigkeit auftretende Gewichtsverlust wird ebenfalls ermittelt. Die Ergebnisse sind in Tabelle 1 zusammengefaßt.

**Tabelle 1**

| | |
|---|---|
| LOI | 33 % |
| Lichtbogenbeständigkeit | 350 s |
| Kriechstromfestigkeit | 3,5 KV |
| auftretender Gewichtsverlust | 0,25 % |

### Vergleichsversuch 1

a) Die im Beispiel 1 unter a) beschriebene Arbeitsweise wird wiederholt mit der Abänderung, daß kein N-(2-Aminoethyl)-3-aminopropyltrimethoxysilan zugegeben wird.
b) Die im Beispiel 1 unter b) beschriebene Arbeitsweise wird wiederholt mit der Abänderung, daß 2 Teile des Additivs ohne Aminosilan, dessen Herstellung oben unter a) beschrieben wurde anstelle der 2 Teile des Additivs mit Aminosilan, dessen Herstellung in Beispiel 1 unter a) beschrieben wurde, eingesetzt werden.

Die Werte für die Schwerbrennbarkeit, Lichtbogenbeständigkeit und Kriechstromfestigkeit, die wie in Beispiel 1 beschrieben, bestimmt wurden, sind in Tabelle 2 zusammengefaßt.

**Tabelle 2**

| | |
|---|---|
| LOI | 28 % |
| Lichtbogenbeständigkeit | 150 s |
| Kriechstromfestigkeit | 2 KV |

### Vergleichsversuch 2

Die im Beispiel 1 unter b) beschriebene Arbeitsweise wird wiederholt mit der Abänderung, daß kein Additiv zugegeben wird

Die Werte für die Schwerbrennbarkeit, Lichtbogenbeständigkeit und Kriechstromfestigkeit, die wie in Beispiel 1 beschrieben bestimmt wurden, sind in Tabelle 3 zusammengefaßt.

**Tabelle 3**

| | |
|---|---|
| LOI | 23 % |
| Lichtbogenbeständigkeit | 120 s |
| Kriechstromfestigkeit | 1,5 KV |

### Vergleichsversuch 3

Die im Beispiel 1 unter b) beschriebene Arbeitsweise wird wiederholt mit den Abänderungen, daß auf 100 Teile der so erhaltenen Mischung anstelle auf 98 Teile der so erhaltenen Mischung 3 Teile pyrogen in der Gasphase erzeugtes Titandioxid, 0,3 Teile Cyanoguanidin und 45 Gewichts-ppm Platin, berechnet als Element in Form des Platin-Vinylsiloxan-Komplexes als Additiv gemäß US 4 419 474 anstelle der 2 Teile des Additivs, dessen Herstellung in Beispiel 1 unter a) beschrieben wurde, zugegeben werden.

Die Werte für die Schwerbrennbarkeit, Lichtbogenbeständigkeit und Kriechstromfestigkeit (zusammen mit dem auftretenden Gewichtsverlust), die wie in Beispiel 1 beschrieben bestimmt wurden, sind in Tabelle 4 zusammengefaßt.

**Tabelle 4**

| | |
|---|---|
| LOI | 29 % |
| Lichtbogenbeständigkeit | 280 s |
| Kriechstromfestigkeit | 3,5 KV |
| auftretender Gewichtsverlust | 3,5 % |

### Beispiel 2

100 Teile eines durch Trimethylsiloxygruppen endblockierten Diorganopolysiloxans aus 99,93 Mol-% Dimethylsiloxaneinheiten und 0,07 Mol-% Vinylmethylsiloxaneinheiten mit einer Viskosität von 8 . 10⁶ mPa.s bei 25°C werden in einem bei 150°C betriebenen Kneter zunächst mit 50 Teilen pyrogen in der Gasphase erzeugten Siliciumdioxid mit einer Oberfläche von 200 m²/g, dann mit 1 Teil durch Trimethylsiloxygruppen endblockiertem Dimethylpolysiloxan mit einer Viskosität von 96 mPa.s bei 25°C, dann mit 7 Teilen eines in den endständigen Einheiten je eine Si-gebundene Hydroxylgruppe aufweisenden Dimethylpolysiloxans mit einer Viskosität von 40 mPa.s bei 25°C, dann erneut mit 1 Teil durch Trimethylsiloxygruppen endblockiertem Dimethylpolysiloxan mit einer Viskosität von 95 mPa.s bei 25°C und schließlich mit 1,2 Teilen Dicumylperoxid vermischt.

98 Teile der so erhaltenen Mischung werden mit 2 Teilen des Additivs, dessen Herstellung in Beispiel 1 unter a) beschrieben wurde, vermischt. Aus dieser Mischung werden durch Vulkanisation bei 180°C Platten mit einer Stärke von 2 mm hergestellt. An einem Teil dieser Platten wird die Schwerbrennbarkeit gemäß ASTM D 2863-70 bestimmt. Der andere Teil der Platten wird nach der Vulkanisation vier Stunden lang bei 200°C getempert. Dann wird die Lichtbogenbeständigkeit nach DIN 57 441 und die Kriechstromfestigkeit nach DIN 57 303 ermittelt. Die Bestimmung der Shore-A-Härte erfolgt dann nach DIN 53 505 mit Normstab S 3A, die Bestimmung der Reißfestigkeit und der Reißdehnung nach DIN 53 504 mit Normstab S 3A und die Bestimmung des Weiterreißwiderstandes nach ASTM D 624 mit Normstab B. Die Ergebnisse sind in Tabelle 5 zusammengefaßt.

**Tabelle 5**

| | |
|---|---|
| LOI | 32,5 % |
| Lichtbogenbeständigkeit | 350 s |
| Kriechstromfestigkeit | 3,5 KV |
| Shore-A-Härte | 42 |
| Reißfestigkeit | 8,0 N/mm² |
| Reißdehnung | 600 % |
| Weiterreißwiderstand | > 22 N/mm |

### Vergleichsversuch 4

a) Die im Beispiel 1 unter a) beschriebene Arbeitsweise wird wiederholt mit der Abänderung, daß kein N-(2-Aminoethyl)-3-aminopropyltrimethoxysilan zugegeben wird.
b) Die Arbeitsweise von Beispiel 2 wird wiederholt mit der Abänderung, daß 2 Teile des Additivs ohne Aminosilan, dessen Herstellung oben unter a) beschrieben wurde anstelle der 2 Teile Additiv mit Aminosilan, dessen Herstellung in Beispiel 1 unter a) beschrieben wurde, eingesetzt werden.

Die Werte für die Schwerbrennbarkeit, Lichtbogenbeständigkeit und Kriechstromfestigkeit, die wie im Beispiel 2 beschrieben bestimmt wurden, sind in Tabelle 6 zusammengefaßt.

**Tabelle 6**

| | |
|---|---|
| LOI | 26 % |
| Lichtbogenbeständigkeit | 150 s |
| Kriechstromfestigkeit | 2 KV |

### Vergleichsversuch 5

Die Arbeitsweise von Beispiel 2 wird wiederholt mit der Abänderung, daß kein Additiv zugegeben wird.

Die Werte für die Schwerbrennbarkeit, Lichtbogenbeständigkeit und Kriechstromfestigkeit, die wie im Beispiel 2 beschieben bestimmt wurden, sind in Tabelle 7 zusammengefaßt.

**Tabelle 7**

| | |
|---|---|
| LOI | 22 % |
| Lichtbogenbeständigkeit | 120 s |
| Kriechstromfestigkeit | 1,5 KV |

### Vergleichsversuch 6

Die Arbeitsweise von Beispiel 2 wird wiederholt mit den Abänderungen, daß eine Mischung aus 40 Teilen pyrogen in der Gasphase erzeugtem Siliciumdioxid mit einer BET-Oberfläche von 200 m²/g und 100 Teilen Aluminiumoxidhydrat Al₂O₃.3H₂O anstelle der 50 Teile pyrogen in der Gasphase erzeugtem Siliciumdioxid mit einer BET-Oberfläche von 200 m²/g eingesetzt wird und kein Additiv zugegeben wird.

Die Werte für die Schwerbrennbarkeit, Lichtbogenbeständigkeit und Kriechstromfestigkeit sowie die mechanischen Eigenschaften, die wie im Beispiel 2 beschrieben bestimmt wurden, sind in Tabelle 8 zusammengefaßt.

**Tabelle 8**

| | |
|---|---|
| LOI | 40 % |
| Lichtbogenbeständigkeit | 320 s |
| Kriechstromfestigkeit | 3,5 KV |
| Shore-A-Härte | 66 |
| Reißfestigkeit | 5,5 N/mm² |
| Reißdehnung | 200 % |
| Weiterreißwiderstand | 13 N/mm |

## Patentansprüche

1. Zu schwerbrennbaren und/oder kriechstromfesten sowie lichtbogenbeständigen Organopolysiloxanelastomeren vernetzbare Massen, dadurch gekennzeichnet, daß die Massen zur Erzielung von Schwerbrennbarkeit und/oder hoher Kriechstromfestigkeit sowie hoher Lichtbogenbeständigkeit ein Additiv in Mengen von 1 bis 4 Gew.-%, bezogen auf das gesamtgewicht der Massen enthalten, das durch Vermischen von
(A) mindestens 60 Gew.-% Diorganopolysiloxan bestehend aus 75 bis 85 Mol-% Dimethylsiloxaneinheiten 15 bis 25 Mol-% Vinylmethylsiloxaneinheiten und gegebenenfalls weiteren Siloxaneinheiten in einer solchen Menge, daß die Summe aus Dimethylsiloxaneinheiten, Vinylmethylsiloxaneinheiten und gegebenenfalls weiteren Siloxaneinheiten 100 Mol% ergibt,
(B) 20 bis 35 Gew.-% eines Metalloxids ausgewählt aus der Gruppe von Titandioxid, Zirkoniumdioxid, Zinkoxid, Cer(III)- und Cer(IV)-oxid mit der Maßgabe, daß zur Erzielung von Kriechstromfestigkeit sowie Lichtbogenbeständigkeit nur Titandioxid oder Zirkoniumdioxid eingesetzt wird, während zur Erzielung von Schwerbrennbarkeit jedes der vorstehend genannten Metalloxide einsetztbar ist,
(C) 0,05 bis 0,25 Gew.-% Platin, berechnet als Element, in Form einer Platinverbindung oder eines Platinkomplexes
(D) 1 bis 5 Gew.-% Organosiliciumverbindung mit über Kohlenstoff an Silicium gebundenem basischem Stickstoff
hergestellt wurde, wobei die Summe der jeweils innerhalb der oben unter (A) bis (D) angegebenen Bereiche gewählten Prozentsätze 100 Gew.-% beträgt und sich die jeweiligen Gew.-% auf das Gesamtgewicht des Additivs beziehen.

2. Massen nach Anspruch 1, dadurch gekennzeichnet, daß sie ein Additiv enthalten, das
(1) durch Vermischen der Bestandteile (A) bis (D) gemäß Anspruch 1 und anschließend an das Vermischen
(2) durch wenigstens 120 Minuten langes Erhitzen des Gemisches auf 80° bis 150°C
hergestellt wurde.

3. Massen nach Anspruch 1 oder 2, dadurch gekennzeichnet, daß als
(D) Organosiliciumverbindung mit über Kohlenstoff an Silicium gebundenen basischem Stickstoff solche ausgewählt aus der Gruppe der Silane der Formel
YₐR_{b}Si(OR¹)_{4-a-b} ,
worin R gleiche oder verschiedene einwertige Kohlenwasserstoffreste mit 1 bis 8 Kohlenstoffatomen je Rest, R¹ gleiche oder verschiedene Alkylgruppen mit 1 bis 4 Kohlenstoffatom(en) je Rest oder ein Rest der Formel -SiR₃, wobei R die oben dafür angegebene Bedeutung hat, Y gleiche oder verschiedene, einwertige SiC-gebundene organische Reste mit basischem Stickstoff bedeuten, a 1 oder 2 und b 0, 1 oder 2 ist,
und Disiloxane der Formel
(Y_{c}R_{d}Si)₂O ,
worin R und Y die oben dafür angegebene Bedeutung haben, c 0, 1, 2 oder 3, insbesondere 1 ist, mit der Maßgabe, daß die Disiloxane mindestens einen Rest Y aufweisen, und d 0 1, 2 oder 3, insbesondere 2 ist,
eingesetzt wird.

4. Verfahren zur Herstellung von zu schwerbrennbaren und/oder kriechstromfesten sowie lichtbogenbeständigen Organopolysiloxanelastomeren vernetzende Massen, dadurch gekennzeichnet, daß den Massen zur Erzielung von Schwerbrennbarkeit und/oder hoher Kriechstromfestigkeit sowie hoher Lichtbogenbeständigkeit ein Additiv in Mengen von 1 bis 4 Gew.-%, bezogen auf das Gesamtgewicht der Massen zugegeben wird, das durch Vermischen von
(A) mindestens 60 Gew.-% Diorganopolysiloxan bestehend aus 75 bis 85 Mol-% Dimethylsiloxaneinheiten, 15 bis 25 Mol-% Vinylmethylsiloxaneinheiten und gegebenenfalls weiteren Siloxaneinheiten in einer solchen Menge, daß die Summe aus Dimethysiloxaneinheiten, Vinylmethylsiloxaneinheiten und gegebenenfalls weiteren Siloxaneinheiten 100 Mol% ergibt,
(B) 20 bis 35 Gew.-% eines Metalloxids ausgewählt aus der Gruppe von Titandioxid, Zirkoniumdioxid, Zinkoxid, Cer(III)- und Cer(IV)-oxid mit der Maßgabe, daß zur Erzielung von Kriechstromfestigkeit sowie Lichtbogenbeständigkeit nur Titandioxid oder Zirkoniumdioxid eingesetzt wird, während zur Erzielung von Schwerbrennbarkeit jedes der vorstehend genannten Metalloxide einsetzbar ist,
(C) 0,05 bis 0,25 Gew.-% Platin, berechnet als Element, in Form einer Platinverbindung oder eines Platinkomplexes
(D) 1 bis 5 Gew.-% Organosiliciumverbindung mit über Kohlenstoff an Silicium gebundenem basischem Stickstoff
hergestellt wurde, wobei die Summe der jeweils innerhalb der oben unter (A) bis (D) angegebenen Bereiche gewählten Prozentsätze 100 Gew.-% beträgt und sich die jeweiligen Gew.-% auf das Gesamtgewicht des Additivs beziehen.

5. Verfahren nach Anspruch 4, dadurch gekennzeichnet, daß den Massen ein Additiv zugegeben wird, das
(1) durch Vermischen der Bestandteile (A) bis (D) gemäß Anspruch 4 und anschließend an das Vermischen
(2) durch wenigstens 120 Minuten langes Erhitzen des Gemisches auf 80° bis 150°C
hergestellt wurde.

6. Verfahren nach Anspruch 4 oder 5, dadurch gekennzeichnet, daß als
(D) Organosiliciumverbindung mit über Kohlenstoff an Silicium gebundenem basischem Stickstoff solche ausgewählt aus der Gruppe der Silane der Formel
YₐR_{b}Si(OR¹)_{4-a-b} ,
worin R gleiche oder verschiedene einwertige Kohlenwasserstoffreste mit 1 bis 8 Kohlenstoffatomen je Rest, R¹ gleiche oder verschiedene Alkylgruppen mit 1 bis 4 Kohlenstoffatom(en) je Rest oder ein Rest der Formel -SiR₃, wobei R die oben dafür angegebene Bedeutung hat, Y gleiche oder verschiedene, einwertige SiC-gebundene organische Reste mit basischem Stickstoff bedeuten, a 1 oder 2 und b 0, 1 oder 2 ist,
und Disiloxane der Formel
(Y_{c}R_{d}Si)₂O ,
worin R und Y die oben dafür angegebene Bedeutung haben, c 0, 1, 2 oder 3, insbesondere 1 ist, mit der Maßgabe, daß die Disiloxane mindestens einen Rest Y aufweisen, und d 0, 1, 2 oder 3, insbesondere 2 ist,
eingesetzt wird.

## Claims

1. Compositions which can be crosslinked to form flame retardant and/or tracking resistant and arc resistant organopolysiloxane elastomers, characterised in that the compositions for achieving flame resistance and/or high tracking resistance and high arc resistance contain an additive in amounts of 1 to 4 % by weight, based on the total weight of the compositions, which was produced by mixing of
(A) at least 60 % by weight of diorganopolysiloxane consisting of 75 to 85 mol % of dimethylsiloxane units, 15 to 25 mol % of vinylmethylsiloxane units and if desired other siloxane units in an amount such that the sum of dimethylsiloxane units, vinylmethylsiloxane units and if desired other siloxane units makes 100 mol %,
(B) 20 to 35 % by weight of a metal oxide selected from the group of titanium dioxide, zirconium dioxide, zinc oxide, Ce(III)oxide and Ce(IV) oxide provided that in order to achieve tracking resistance and arc resistance only titanium dioxide or zirconium dioxide is used, while to achieve flame resistance any of the metal oxides mentioned above can be used,
(C) 0.05 to 0.25 % by weight of platinum, calculated as the element, in the form of a platinum compound or of a platinum complex
(D) 1 to 5 % by weight of organosilicon compound having basic nitrogen bonded via carbon to silicon
in which the sum of the percentages selected in each case within the ranges given above for (A) to (D) is 100 % by weight and the % by weight relate in each case to the total weight of the additive.

2. Compositions according to Claim 1, characterised in that they contain an additive, which
(1) was produced by mixing of the components (A) to (D) according to Claim 1 and subsequent to the mixing
(2) by heating the mixture at 80°C to 150°C for at least 120 minutes.

3. Compositions according to Claim 1 or 2, characterised in that as organosilicon compound (D) having basic nitrogen bonded via carbon to silicon, those used are selected from the group of silanes of the formula
YₐR_{b}Si(OR¹)_{4-a-b} ,
in which R denotes identical or different monovalent hydrocarbon radicals having 1 to 8 carbon atoms per radical, R¹ denotes identical or different alkyl groups having 1 to 4 carbon atom(s) per radical or a radical of the formula -SiR₃, in which R has the meaning given for it above, Y denotes identical or different, monovalent SiC-bonded organic radicals with basic nitrogen, a is 1 or 2 and b is 0, 1 or 2,
and disiloxanes of the formula
(Y_{c}R_{d}Si)₂O,
in which R and Y have the meaning given for them above, c is 0, 1, 2 or 3, particularly 1, provided that the disiloxanes have at least one radical Y and d is 0, 1, 2 or 3, particularly 2.

4. Process for the production of compositions which crosslink to form flame retardant and/or tracking resistant and arc resistant organopolysiloxane elastomers, characterised in that in order to achieve flame resistance and/or higher tracking resistance and higher arc resistance an additive in amounts of 1 to 4 % by weight, based on the total weight of the compositions is added to the compositions, which was produced by mixing of
(A) at least 60 % by weight of diorganopolysiloxane consisting of 75 to 85 mol % of dimethylsiloxane units, 15 to 25 mol % of vinylmethylsiloxane units and if desired other siloxane units in an amount such that the sum of dimethylsiloxane units, vinylmethylsiloxane units and if desired other siloxane units makes 100 mol %,
(B) 20 to 35 % by weight of a metal oxide selected from the group of titanium dioxide, zirconium dioxide, zinc oxide, Ce(III) oxide and Ce(IV) oxide provided that in order to achieve tracking resistance and arc resistance only titanium dioxide or zirconium dioxide is used, while to achieve flame resistance any of the metal oxides mentioned above can be used,
(C) 0.05 to 0.25 % by weight of platinum, calculated as the element, in the form of a platinum compound or of a platinum complex
(D) 1 to 5 % by weight of organosilicon compound having basic nitrogen bonded via carbon to silicon in which the sum of the percentages selected in each case within the ranges given above for (A) to (D) is 100 % by weight and the % by weight relate in each case to the total weight of the additive.

5. Process according to Claim 4, characterised in that an additive is added to the compositions, which was produced
(1) by mixing of the components (A) to (D) according to Claim 4 and subsequent to the mixing
(2) by heating the mixture at 80°C to 150°C for at least 120 minutes.

6. Process according to Claim 4 or 5, characterised in that as organosilicon compound (D) having basic nitrogen bonded via carbon to silicon, those used are selected from the group of silanes of the formula
YₐR_{b}Si(OR¹)_{4-a-b}
in which R denotes identical or different monovalent hydrocarbon radicals having 1 to 8 carbon atoms per radical, R¹ denotes identical or different alkyl groups having 1 to 4 carbon atom(s) per radical or a radical of the formula -SiR₃, in which R has the meaning given for it above, Y denotes identical or different, monovalent SiC-bonded organic radicals with basic nitrogen, a is 1 or 2 and b is 0, 1 or 2,
and disiloxanes of the formula
(Y_{c}R_{d}Si)₂O
in which R and Y have the meaning given for them above, c is 0, 1, 2 or 3, particularly 1, provided that the disiloxanes have at least one radical Y and d is 0, 1, 2 or 3, particularly 2.

## Revendications

1. Compositions réticulables en élastomères de polyorganosiloxane, difficilement combustibles et/ou résistant aux courants de fuite et l'arc électrique, caractérisées en ce que les compositions, pour pouvoir présenter les propriétés d'incombustibilité et/ou de résistance élevée aux courants de fuite et de résistance élevée à l'arc électrique, contiennent, en des quantités de 1 à 4 % en poids par rapport au poids total des compositions, un additif que l'on a préparé en mélangeant :
(A) au moins 60 % en poids d'un polydiorganosiloxane constitué de 75 à 85 % en moles de motifs diméthylsiloxane, de 15 à 25 % en moles de motifs vinylméthylsiloxane, et éventuellement d'autres motifs siloxane, en une quantité telle que la somme des motifs diméthylsiloxane, des motifs vinylméthylsiloxane et des éventuels autres motifs siloxane soit de 100 % en moles,
(B) de 20 à 35 % en poids d'un oxyde métallique choisi parmi l'ensemble comprenant le dioxyde de titane, le dioxyde de zirconium, l'oxyde de zinc, l'oxyde de cérium(III) et de cérium (IV), du moment que l'on n'utilise, pour arriver aux propriétés de résistance aux courants de fuite et à l'arc électrique, que du dioxyde de titane ou du dioxyde de zirconium, tandis que, pour arriver à l'inflammabilité, on peut utiliser l'un quelconque des oxydes métalliques mentionnés ci-dessus,
(C) de 0,05 à 0,25 % en poids de platine, exprimé en platine élémentaire, sous forme d'un composé du platine ou d'un complexe du platine,
(D) de 1 à 5 % en poids d'un composé organique du silicium comportant un azote basique lié au silicium par l'intermédiaire d'un atome de carbone,
la somme des pourcentages, choisis chacun dans les intervalles indiqués en (A) à (D) ci-dessus, étant de 100 % en poids, les différents pourcentages en poids étant rapportés au poids total de l'additif.

2. Compositions selon la revendication 1, caractérisées en ce qu'elles contiennent un additif qui a été préparé :
(1) par mélange des constituants (A) à (D) selon la revendication 1, suivi
(2) d'au moins 120 minutes de chauffage à une température de 80 à 150°C.

3. Compositions selon la revendication 1 ou 2, caractérisées en ce qu'on utilise en tant que composant organique du silicium (D) comportant un atome d'azote basique lié au silicium par l'intermédiaire d'un atome de carbone un composé choisi parmi l'ensemble des silanes de formule :
YₐR_{b}Si(OR¹)_{4-a-b}
dans laquelle R représente des résidus hydrocarbonés monovalents identiques ou différents ayant chacun de 1 à 8 atomes de carbone, R¹ représente des groupes alkyle identiques ou différents ayant chacun de 1 à 4 atomes de carbone, ou encore un résidu de formule -SiR₃ où R a les significations données ci-dessus, y représente des résidus organiques liés par liaison SiC, monovalents, identiques ou différents, et comportant un azote basique, a vaut 1 ou 2 et b vaut 0, 1 ou 2, et
des disiloxanes de formule :
(Y_{c}R_{d}Si)₂O
dans laquelle R et Y ont les significations données ci-dessus, c vaut 0, 1, 2 ou 3, en particulier 1, du moment que les disiloxanes possèdent au moins un radical Y, et que d vaut 0, 1, 2 ou 3, notamment 2.

4. Procédé pour préparer des compositions réticulables en élastomères de polyorganosiloxane, difficilement combustibles et/ou résistant aux courants de fuite et l'arc électrique, caractérisé en ce qu'on ajoute aux compositions, pour pouvoir présenter les propriétés d'incombustibilité et/ou de résistance élevée aux courants de fuite et de résistance élevée à l'arc électrique, contiennent, en des quantités de 1 à 4 % en poids par rapport au poids total des compositions, un additif que l'on a préparé en mélangeant :
(A) au moins 60 % en poids d'un polydiorganosiloxane constitué de 75 à 85 % en moles de motifs diméthylsiloxane, de 15 à 25 % en moles de motifs vinylméthylsiloxane, et éventuellement d'autres motifs siloxane, en une quantité telle que la somme des motifs diméthylsiloxane, des motifs vinylméthylsiloxane et des éventuels autres motifs siloxane soit de 100 % en moles,
(B) de 20 à 35 % en poids d'un oxyde métallique choisi parmi l'ensemble comprenant le dioxyde de titane, le dioxyde de zirconium, l'oxyde de zinc, l'oxyde de cérium(III) et de cérium (IV), du moment que l'on n'utilise, pour arriver aux propriétés de résistance aux courants de fuite et à l'arc électrique, que du dioxyde de titane ou du dioxyde de zirconium, tandis que, pour arriver à l'inflammabilité, on peut utiliser l'un quelconque des oxydes métalliques mentionnés ci-dessus,
(C) de 0,05 à 0,25 % en poids de platine, exprimé en platine élémentaire, sous forme d'un composé du platine ou d'un complexe du platine,
(D) de 1 à 5 % en poids d'un composé organique du silicium comportant un azote basique lié au silicium par l'intermédiaire d'un atome de carbone,
la somme des pourcentages, choisis chacun dans les intervalles indiqués en (A) à (D) ci-dessus, étant de 100 % en poids, les différents pourcentages en poids étant rapportés au poids total de l'additif.

5. Procédé selon la revendication 4, caractérisé en ce qu'on ajoute aux compositions un additif qui a été préparé :
(1) par mélange des constituants (A) à (D) selon la revendication 4, suivi
(2) d'au moins 120 minutes de chauffage à une température de 80 à 150°C.

6. Procédé selon la revendication 4 ou 5, caractérisé en ce qu'on utilise en tant que composant organique du silicium (D) comportant un atome d'azote basique lié au silicium par l'intermédiaire d'un atome de carbone un composé choisi parmi l'ensemble des silanes de formule :
YₐR_{b}Si(OR¹)_{4-a-b}
dans laquelle R représente des résidus hydrocarbonés monovalents identiques ou différents ayant chacun de 1 à 8 atomes de carbone, R¹ représente des groupes alkyle identiques ou différents ayant chacun de 1 à 4 atomes de carbone, ou encore un résidu de formule -SiR₃ où R a les significations données ci-dessus, Y représente des résidus organiques liés par liaison SiC, monovalents, identiques ou différents, et comportant un azote basique, a vaut 1 ou 2 et b vaut 0, 1 ou 2, et
des disiloxanes de formule :
(Y_{c}R_{d}Si)₂O
dans laquelle R et Y ont les significations données ci-dessus, c vaut 0, 1, 2 ou 3, en particulier 1, du moment que les disiloxanes possèdent au moins un radical Y, et que d vaut 0, 1, 2 ou 3, notamment 2.
